# EUROPEAN PATENT APPLICATION

(11) **EP 3 038 293 A1**
(43) Date of publication of application: **29.06.2016**
(21) Application number: 14837848.2
(22) Date of filing: 05.08.2014
(51) Int. Cl.: H04L 12/28

(54) **LIGHTING CONTROL SYSTEM, TERMINAL AND LIGHTING CONTROL METHOD THEREBY**

(30) Priority: 21.08.2013 JP 2013170885
(71) Applicant: Aplix IP Holdings Corporation, Tokyo 169-0051 (JP)
(72) Inventor: KORIYAMA, Ryu, Tokyo 1690051 (JP); ADACHI, Eiji, Tokyo 1690051 (JP)
(74) Representative: Cohausz & Florack
(86) International application number: PCT/JP2014/070563
(87) International publication number: WO 2015/025707

(57) **Abstract**

Maneuvering efficiency in controlling plural lighting devices is improved. A lighting control system includes a plurality of lighting devices and at least one terminal. Each of the plurality of lighting devices includes a state retainer that retains the state of the own device, a lighting identifier retainer that retains the identifier of the own device, a control instruction detector that detects a control instruction issued to the own device, and updates the state retained in the state retainer into a state in accordance with the control instruction, a light emitter that emits light according to the state retained in the state retainer, and a response signal transmitter that transmits a response signal, which contains the state retained in the state retainer and the identifier retained in the lighting identifier retainer, in response to the control instruction detected by the control instruction detector. The terminal includes a control signal transmitter that transmits a control signal which contains a control instruction with all or part of the plurality of lighting devices as lighting devices to be controlled, a response signal receiver that receives the response signal from each of the plurality of lighting devices, and a display that displays the state of each of the plurality of lighting devices according to the response signal.

## Description

### Technical Field

The present invention relates to a lighting control system. More particularly, the present invention relates to a lighting control system, and particularly to a lighting control system that controls a state with a plurality of lighting devices as objects to be controlled a terminal, a lighting control method thereof, and a program that allows a computer to implement the method.

### Background Art

In the past, a lighting control system in which a plurality of lighting devices in a relatively wide space such as in an office are divided into groups, and are lit or extinguished group by group has been proposed. For example, a system in which groups are set for a plurality of lighting devices and the lighting devices are lit at dimming ratios that differ among the groups so that to which of the groups the lighting devices belong can be visually recognized has been proposed (refer to, for example,

### Patent Literature 1).

### Citation List

Patent Literature
PTL 1: Japanese Patent Application Laid-Open No. 2010-198877

### Summary of Invention

### Technical Problem

In the foregoing related arts, a plurality of lighting devices can be lit at dimming ratios that differ group by group. However, in the foregoing related art, the actual lighting devices have to be viewed while they are maneuvered using remote control equipment, and therefore, maneuvering for lighting control becomes complicated.

The present invention addresses the foregoing situation, and an object of the present invention is to improve maneuvering efficiency in controlling a plurality of lighting devices.

### Solution to Problem

The present invention is intended to address the aforesaid problem. According to a first aspect of the present invention, there are provided a lighting control system that includes a plurality of lighting devices and a terminal that wirelessly communicates with the plurality of lighting devices, and a lighting control method thereof. Herein, each of the plurality of lighting devices includes a state retainer that retains a state of its own device, a lighting identifier retainer that retains an identifier of the own device, a control instruction detector that detects a control instruction issued to the own device and updates the state retained in the state retainer into a state according to the control instruction, a light emitter that emits light according to the state retained in the state retainer, and a response signal transmitter that transmits a response signal, which contains the state retained in the state retainer and the identifier retained in the lighting identifier retainer, according to the control instruction detected by the control instruction detector. The terminal includes a control signal transmitter that transmits a control signal which contains the control instruction with all or part of the plurality of lighting devices as lighting devices to be controlled, a response signal receiver that receives the response signal from each of the plurality of lighting devices, and a display that displays the state of each of the plurality of lighting devices on the basis of the response signal. Accordingly, such an effect is brought about that a control instruction which causes the plurality of lighting devices to make a state transition is issued to the plurality of lighting devices, and the resultant states are displayed on the terminal.

According to a second aspect of the present invention, a terminal includes a control signal transmitter that transmits a control signal, which contains a control instruction with all or part of a plurality of lighting devices as lighting devices to be controlled, through wireless communication, a response signal receiver that receives a response signal, which contains the identifier and state of each of the plurality of lighting devices and responds to the control instruction, through wireless communication, and a display that displays the state of each of the plurality of lighting devices on the basis of the response signal. Accordingly, such an effect is brought about that a control instruction which causes the plurality of lighting devices to make a state transition is issued from the terminal to the plurality of lighting devices, and the resultant states of the plurality of lighting devices are displayed on the terminal.

### Advantageous Effects of Invention

According to aspects of the present invention, a superb advantageous effect that maneuvering efficiency in controlling a plurality lighting devices can be improved can be exerted.

### Brief Description of Drawings

Fig. 1 is a diagram showing an example of an overall configuration of a lighting control system in accordance with an embodiment of the present invention.
Fig. 2 is a diagram showing an example of functional configurations of a lighting device 100 and terminal 200 respectively in the embodiment of the present invention.
Fig. 3 is a diagram outlining concurrent control on all lighting devices 100 to be performed from the terminal 200 in the embodiment of the present invention.
Fig. 4 is a sequence diagram showing an example of a processing flow to be followed for performing concurrent control on all the lighting devices 100 at the terminal 200 in the embodiment of the present invention.
Fig. 5 is a diagram outlining individual control on a specific lighting device 100 to be performed from the terminal 200 in the embodiment of the present invention.
Fig. 6 is a sequence diagram showing an example of a flow of processes for performing individual control on a specific lighting device 100 at the terminal 200 in the embodiment of the present invention.
Fig. 7 is a diagram outlining operation to be made on a specific lighting device 100 in the embodiment of the present invention.
Fig. 8 is a sequence diagram showing an example of a flow of processes when operation is made on a specific lighting device 100 in the embodiment of the present invention.
Fig. 9 is a sequence diagram showing an example of a flow of processes for issuing a state acquisition instruction to all the lighting devices 100 from the terminal 200 in the embodiment of the present invention.
Fig. 10 is a diagram showing an example of correspondence of each of use cases with lighting controls in the embodiment of the present invention.
Fig. 11 is a diagram outlining concurrent control on all the lighting devices 100 to be performed from the terminal 200 according to a use case in the embodiment of the present invention.
Fig. 12 is a sequence diagram showing an example of a flow of processes for performing concurrent control on all the lighting devices 100 from the terminal 200 according to a use case in the embodiment of the present invention.
Fig. 13 is a diagram outlining editing of a use case for each of the lighting devices 100 to be performed from the terminal 200 in the embodiment of the present invention.
Fig. 14 is a diagram showing a first example of display on the terminal 200 in the embodiment of the present invention.
Fig. 15 is a diagram showing a second example of display on the terminal 200 in the embodiment of the present invention.
Fig. 16 is a diagram showing a third example of display on the terminal 200 in the embodiment of the present invention.
Fig. 17 is a diagram showing a fourth example of display on the terminal 200 in the embodiment of the present invention.
Fig. 18 is a diagram showing an example of application to Bluetooth (registered trademark) Low Energy (BLE) in a case where concurrent control on all the lighting devices 100 is performed from the terminal 200 in the embodiment of the present invention.
Fig. 19 is a diagram showing an example of state of radio waves on advertising channels of BLE, in the embodiment of the present invention.
Fig. 20 is a diagram showing an example of application to BLE in a case where individual control on a specific lighting device 100 is performed from the terminal 200 in the embodiment of the present invention.
Fig. 21 is a diagram showing an example of a communication packet format of BLE.
Fig. 22 is a diagram showing an example of a PDU format of BLE.
Fig. 23 is a diagram showing the contents of an ADV_IND advertising PDU transmitted from the terminal 200 in the embodiment of the present invention.
Fig. 24 is a diagram showing an example of a data format for control information in the embodiment of the present invention.
Fig. 25 is a diagram showing an example of a control message in the embodiment of the present invention.
Fig. 26 is a flowchart describing an example of a processing procedure for determining contents of control to be performed in a lighting device 100 in the embodiment of the present invention.
Fig. 27 is a diagram showing an example of the contents included in an ADV_NONCONN_IND advertising PDU transmitted from a lighting device 100 in the embodiment of the present invention.
Fig. 28 is a diagram showing an example of a data format for response information in the embodiment of the present invention.
Fig. 29 is a diagram showing an example of a response message in the embodiment of the present invention.
Fig. 30 is a diagram showing an example of application to BLE in a case in which operation is made in a specific lighting device 100 in the embodiment of the present invention.
Fig. 31 is a diagram showing an example of application to BLE in a case where data is set in a lighting device 100 from the terminal 200 in the embodiment of the present invention.
Fig. 32 is a diagram showing an example of a control message for requesting setting operation from the terminal 200 in the embodiment of the present invention.
Fig. 33 is a diagram showing the contents included in an ADV_IND advertising PDU transmitted from a lighting device 100 for notifying a setting service in the embodiment of the present invention.
Fig. 34 is a diagram showing an example of a service UUID to be advertised from a lighting device 100 in the embodiment of the present invention.
Fig. 35 is a diagram showing an example of a list of characteristics to be provided by a LIGHT_CONFIGURTION service for setting data, in the embodiment of the present invention.

### Description of Embodiment

### 1. Embodiment

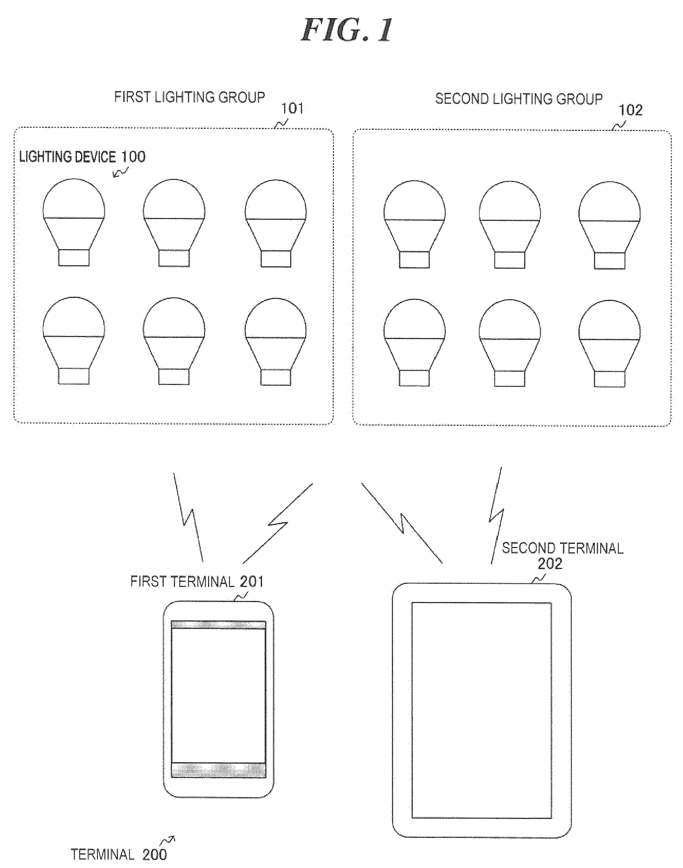

Fig. 1 is a diagram showing an example of an overall configuration of a lighting control system in accordance with an embodiment of the present invention. The lighting control system includes a plurality of lighting devices 100 that are an object of control, and a terminal 200 that is control equipment. The lighting devices 100 and terminal 200 each include a transceiver for digital wireless communication that employs a specific frequency band (for example, the Industry Science Medical (ISM) band). Each of a plurality of lighting devices 100 is controlled based on a control signal to be transmitted from the terminal 200 through wireless communication.

The plurality of lighting devices 100 may be sorted into any of a plurality of groups respectively. In this example, the plurality of lighting devices 100 are sorted into either a first lighting group 101 or second lighting group 102, and can be controlled group by group. Sorting the lighting devices 100 into groups and controlling them group by group is intended to make it possible to concurrently maneuver the lighting devices instead of individually maneuvering all lighting devices existent in a certain room or lighting devices located by windows one by one. In addition, this exerts an effect of avoiding an incident that a radio wave reaches an unintended lighting device to control the lighting device.

Herein, though two terminals of a first terminal 201 and second terminal 202 are shown as the terminals 200, the number of terminals may be one or three or more.

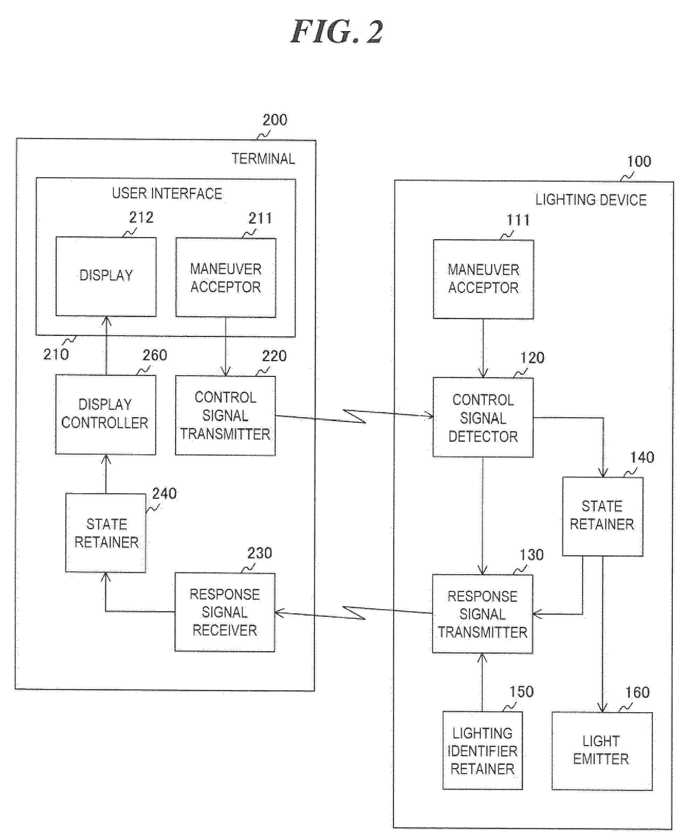

Fig. 2 is a diagram showing an example of the functional configurations of the lighting device 100 and terminal 200 respectively in the embodiment of the present invention.

The lighting device 100 includes a maneuver acceptor 111, control instruction detector 120, response signal transmitter 130, state retainer 140, lighting identifier retainer 150, and light emitter 160. The terminal 200 includes a user interface 210, control signal transmitter 220, response signal receiver 230, state retainer 240, and display controller 260.

In the lighting device 100, the control instruction detector 120 detects a control instruction issued to the lighting device 100. Though a control signal transmitted from the terminal 200 is assumed as the control instruction, a maneuver performed at the maneuver acceptor 111 may be included. The control instruction detector 120 causes the lighting device 100 to make a state transition into a state according to the detected control instruction. More particularly, a content retained in the state retainer 140 is updated to the state following the control instruction.

The state retainer 140 retains the state of the lighting device 100. The state of the lighting device 100 is a lit or extinguished state. In the case of the lit state, in what way the lighting device is dimmed or toned is indicated. The light emitter 160 emits light according to the state retained in the state retainer 140.

The response signal transmitter 130 transmits a response signal, which contains the state of a lighting device 100 and the identifier of the lighting device 100, following the control instruction, which is detected by the control instruction detector 120, through wireless communication. The lighting identifier retainer 150 retains the identifier of the lighting device 100. The response signal transmitter 130 embeds the identifier, which is retained in the lighting identifier retainer 150, in the response signal and transmits the response signal.

The maneuver acceptor 111 is a maneuvering member such as a switch or adjustment knob connected to the lighting device 100. As mentioned above, though a control signal transmitted from the terminal 200 is assumed as the control instruction, a maneuver performed to issue a control instruction may be received from a user by the maneuver acceptor 111, and the control instruction may be detected by the control instruction detector 120.

In the terminal 200, the user interface 210 is an interface via which data is transferred between the terminal and user. The user interface 210 includes a maneuver acceptor 211 and a display 212, and is realized with, for example, a touch panel. The maneuver acceptor 211 accepts a maneuver input made for the lighting device 100 by a user. The display 212 displays the state of the lighting device 100.

The control signal transmitter 220 transmits a control signal, which contains a control instruction accepted by the maneuver acceptor 211, to the lighting device 100 through wireless communication.

The response signal receiver 230 receives a response signal, which responds to the control instruction and is transmitted from the lighting device 100, through wireless communication. The response signal receiver 230 allows the state retainer 240 to retain the current state of each of lighting devices 100 on the basis of the state contained in the response signal.

The state retainer 240 retains the states of respective lighting devices 100. The state retainer 140 of the lighting device 100 retains only the state of its own lighting device 100, while the state retainer 240 retains the states of all the lighting devices 100 included in a lighting control system.

The display controller 260 controls the display 212 so that the states of respective lighting devices 100 retained in the state retainer 240 can be displayed on the display 212.

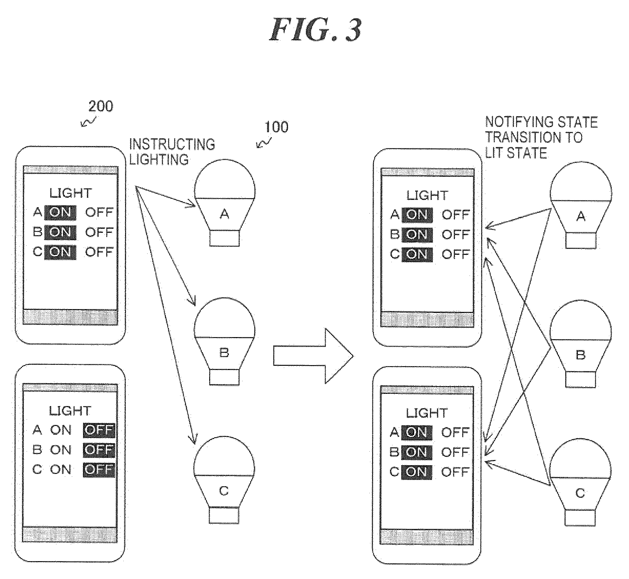

Fig. 3 is a diagram outlining concurrent control on all lighting devices 100 to be performed from the terminal 200 in the embodiment of the present invention. In this example, a case is assumed in which when three lighting devices A, B, and C are all extinguished, one of two terminals 200 issues an instruction to light all the lighting devices A, B, and C.

According to the control instruction issued from the terminal 200, the lighting devices A, B, and C make a transition from an extinguished state to a lit state respectively. The lighting devices A, B, and C broadcast to the effect that they have made a transition to the lit state. On receipt of the states of the respective lighting devices A, B, and C, the terminals 200 display the states of the respective lighting devices A, B, and C on the displays 212. Accordingly, a user can readily recognize the current states of the lighting devices A, B, and C.

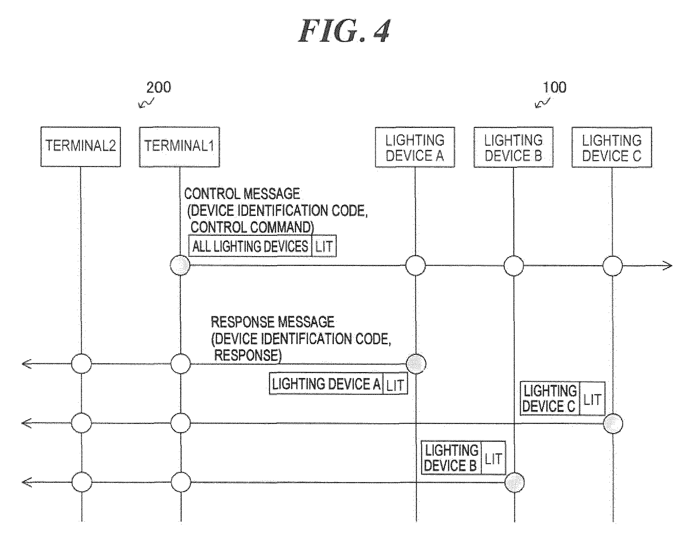

Fig. 4 is a sequence diagram showing an example of a flow of processes for performing concurrent control on all lighting devices 100 from the terminal 200 in the embodiment of the present invention. In the drawing, each of gray circles indicates a transmission source of a radio signal, and each of white circles signifies that the signal has been received as an effective signal directed to an own device by the terminal 200 or lighting device 100. The same notation applies to sequence diagrams to be presented below.

The terminal 200 broadcasts a control instruction (control message), which contains a device identification code and the state of each of lighting devices 100 (lit state, extinguished state, dimmed state, or toned state), according to a maneuver performed by a user. In this example, the lit state is designated. As for the device identification code, a specific lighting device 100, all lighting devices 100 belonging to a certain group, or all arbitrary lighting devices 100 can be designated as an object of control. In this example, all of the lighting devices A, B, and C are designated.

When receiving a control message from the terminal 200, each of a plurality of lighting devices 100 decides, based on a device identification code stored in the message, whether the lighting device itself falls under an object of control. If the lighting device falls under the object of control, the lighting device 100 controls itself on the basis of the state stored in the control message. In this example, since all the lighting devices 100 are designated, all the lighting devices A, B, and C are lit.

Each of the lighting devices 100 that have performed control on the basis of a control message broadcasts a response message containing a device identification code, which includes an identifier of the lighting device itself, and the state of the lighting device (lit state, extinguished state, dimmed state, or toned state). In this example, the response message indicates that all the lighting devices A, B and C are lit.

On receipt of response messages transmitted from the plurality of lighting devices 100 respectively, the terminal 200 extracts device identification codes and information on the states of the lighting devices stored in the response messages, so as to recognize the current states of the respective lighting devices 100.

Owing to the foregoing configuration, the states of a plurality of lighting devices 100 (lit states, extinguished states, dimmed states, or toned states) can be remotely and concurrently controlled from the terminal 200.

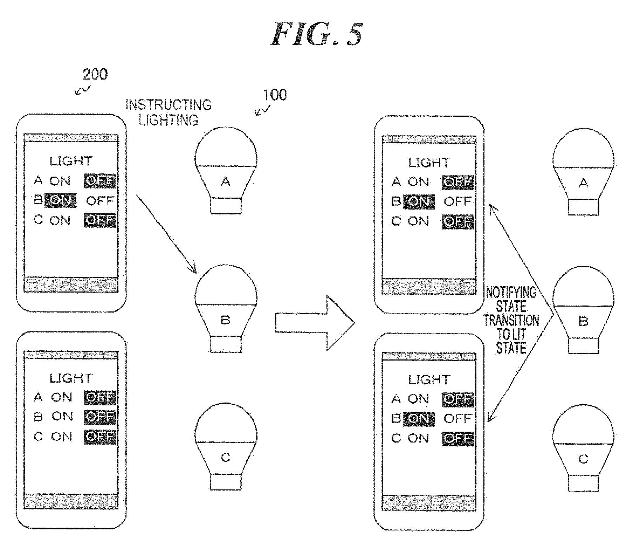

Fig. 5 is a diagram outlining individual control on a specific lighting device 100 to be performed from the terminal 200 in the embodiment of the present invention. In this example, a case is assumed in which when three lighting devices A, B, and C are all extinguished, one of two terminals 200 is supposed to issue an instruction to light the lighting device B alone.

According to a control instruction issued from the terminal 200, the lighting device B makes a transition from an extinguished state to a lit state. The lighting device B then broadcasts to the effect that the lighting device has made a transition to the lit state. On receipt of the state of the lighting device B, each of the terminals 200 reflects the received state and displays the states of the respective lighting devices A, B, and C on the display 212. Accordingly, a user can readily recognize the current states of the lighting devices A, B, and C.

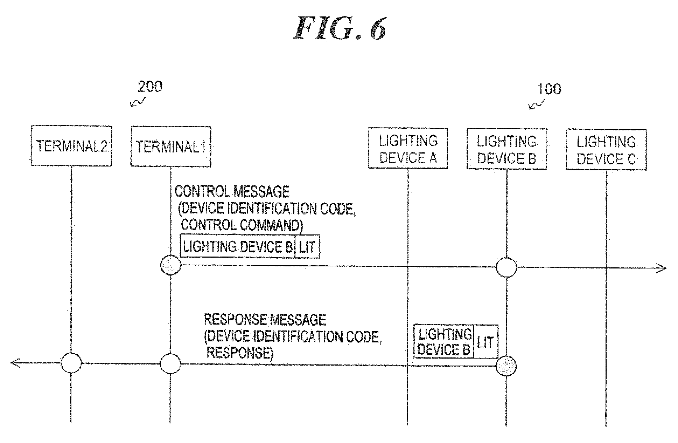

Fig. 6 is a sequence diagram showing an example of a flow of processes for performing individual control on a specific lighting device 100 from the terminal 200 in the embodiment of the present invention.

When broadcasting a control message, the terminal 200 can designate a specific lighting device 100. In this example, the lighting device B is designated.

Since the lighting device B falls under an object of control, the lighting device B controls itself on the basis of the state contained in the control message. In this example, the lighting device B is lit.

The lighting device B then broadcasts a response message containing a device identification code, which contains an identifier of the lighting device B, and the state of the lighting device B (in this case, a lit state).

On receipt of the response message transmitted from the lighting device B, the terminal 200 extracts the device identification code and the state of the lighting device stored in the response message, and recognize that the lighting device B is lit. The terminal 200 reflects the received state and displays the states of the respective lighting devices A, B, and C on the display 212. Accordingly, a user can readily recognize the current states of the lighting devices A, B, and C.

As seen from a description made so far, a response message to be transmitted from each of a plurality of lighting devices 100 can be received not only by the terminal 200, which has issued a control message, but also by the other terminal 200. Therefore, the states of the respective lighting devices 100 may be displayed on any optional terminal 200 that has received the response message. When any state is changed, the change of the state can be immediately reflected on a screen.

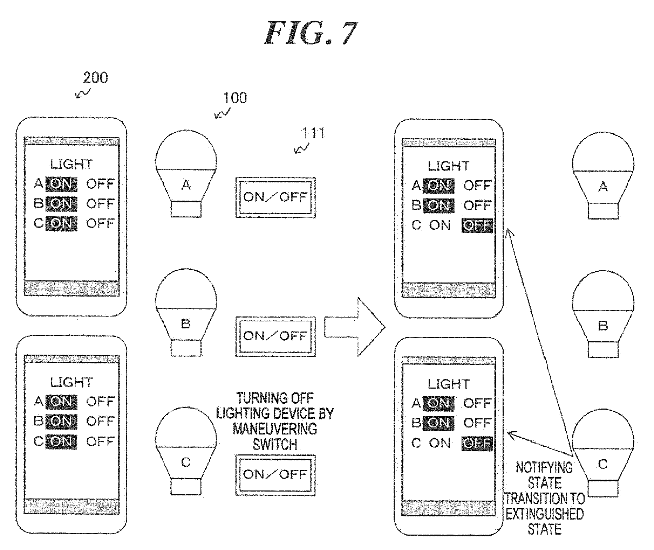

Fig. 7 is a diagram outlining a case where operation is made in a specific lighting device 100 in the embodiment of the present invention. In this example, a case is assumed in which when three lighting devices A, B, and C are lit, a maneuver is performed to turn off a switch at the maneuver acceptor 111 of the lighting device C.

The lighting device C makes a transition from a lit state to an extinguished state according to the maneuver. The lighting device C broadcasts to the effect that the lighting device has made a transition to the extinguished state. On receipt of the state of the lighting device C, each of the terminals 200 reflects the received state and displays the states of the respective lighting devices A, B, and C on the display 212. Accordingly, a user can readily recognize the current states of the lighting devices A, B, and C respectively.

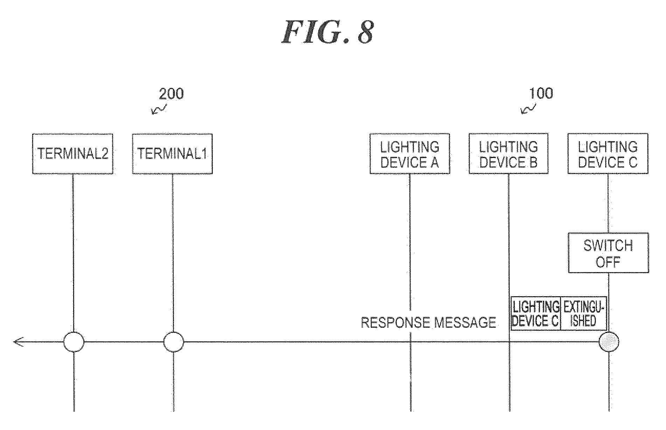

Fig. 8 is a sequence diagram showing an example of a flow processes when a specific lighting device 100 is maneuvered in the embodiment of the present invention.

When the lighting device C detects a maneuver performed to turn off a switch, the lighting device C makes a transition from a lit state to an extinguished state according to the maneuver.

The lighting device C broadcasts a response message which contains a device identification code, which contains an identifier of the lighting device, and the state of the lighting device itself (in this example, an extinguished state).

On receipt of the response message transmitted from the lighting device C, the terminal 200 extracts the device identification code and information on the state of lighting stored in the response message, and recognizes that the lighting device C is extinguished. The terminal 200 reflects the information and displays the states of the respective lighting devices A, B, and C on the display 212. Accordingly, even when the lighting device 100 is maneuvered, a user can readily recognize the current states of the lighting devices A, B, and C.

Since the terminal 200 and lighting device 100 perform connectionless communication in which a connection link is not established, control can be achieved for a short period of time. Regardless of whether the terminal 200 is a terminal that has transmitted a control message, the states of lighting devices 100 can be recognized at an optional terminal 200. Therefore, it is easy to configure the plurality of terminals 200 as controllers.

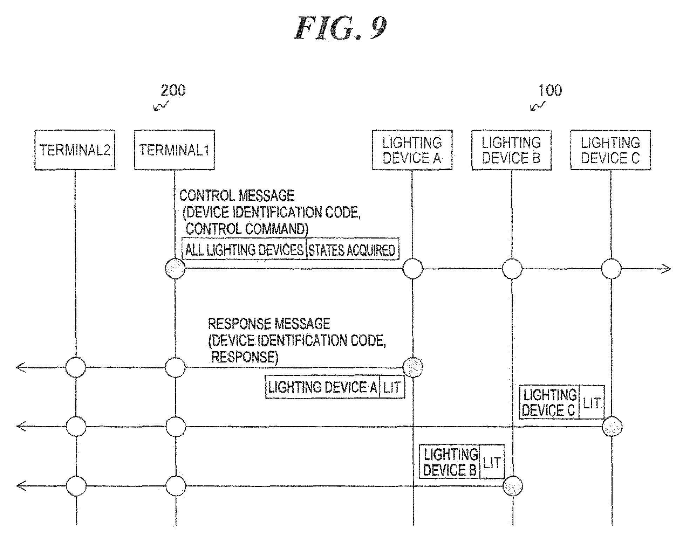

Fig. 9 is a sequence diagram showing an example of a flow of processes for issuing a state acquisition instruction from the terminal 200 to all lighting devices 100 in the embodiment of the present invention.

The terminal 200 broadcasts a control message, which contains a device identification code and a command requesting controlled state information on a lighting device 100, according to a maneuver performed by a user. Each of lighting devices 100 receives the message, and decides, based on the device identification code contained in the control message, whether the lighting device falls under an object of control. When the lighting device recognizes as being the object of control, the lighting device 100 specifies its own identifier in the device identification code and broadcasts a response message containing the current controlled state (lit state, extinguished state, dimmed state, or toned state).

Thus, since a plurality of lighting devices 100 concurrently respond to a single control message without establishing a connection with each of them, the states of the respective lighting devices 100 can be acquired in a short period of time, and displayed on a screen. Regardless of whether a terminal is the terminal 200 that has transmitted the control message, the states of the plurality of lighting devices 100 can be recognized at any optional terminal 200.

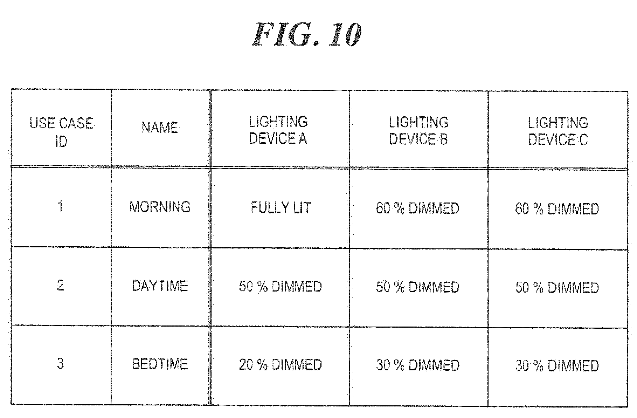

Fig. 10 is a diagram showing an example of a relationship of use cases to lighting control in the embodiment of the present invention. A use case refers to a use scene where the lighting device 100 is utilized. For example, even in the same use case, different dimming quantities may be set for a lighting device located by a window and a lighting device located in a room where external light hardly reaches. When an individual control quantity can be set for each of a plurality of lighting devices 100 in relation to each of the use cases, the plurality of lighting devices 100 can be concurrently controlled with different control quantities.

Each of lighting devices 100 retains an association of a plurality of use cases with control values (lighting, extinguishment, dimming, or toning values). When a control message containing an ID of a use case is received, a lighting device is controlled based on a control value that is associated with the use case ID and set for the lighting device.

In this example, as use cases, three cases of "morning," "daytime," and "bedtime" are assumed, and 1 to 3 are assigned as use case IDs to the use cases. In relation to "morning," the lighting device A is set to be fully lit, while the lighting devices B and C are set to be 60% dimmed. In relation to "daytime," all of the lighting devices A, B, and C are set to be 50% dimmed. In relation to "bedtime," the lighting device A is set to be 20% dimmed while the lighting devices B and C are set to be 30% dimmed.

Each of the lighting devices 100 retains its own control values associated with use case IDs, but is not concerned with the association of the use case IDs with the control values for the other lighting devices 100. Namely, the settings of the use cases in each of the lighting devices 100 are independent of those in the other lighting devices.

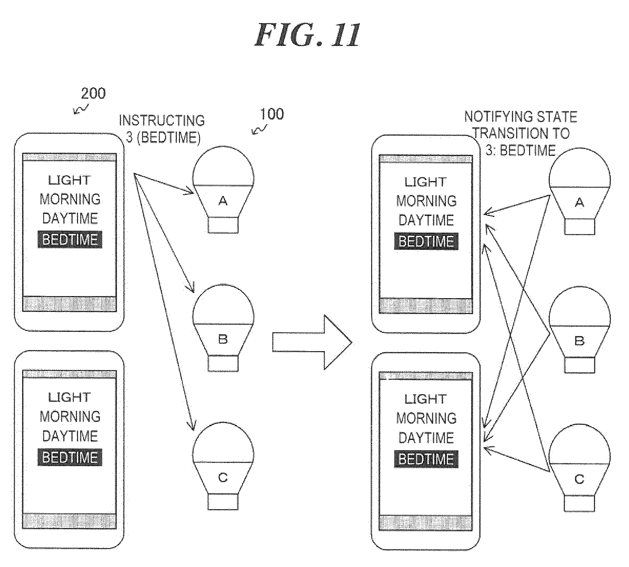

Fig. 11 is a diagram outlining concurrent control on all lighting devices 100 to be performed from the terminal 200 according to a use case in the embodiment of the present invention. In this example, a setting for a use case "bedtime" is assumed in each of three lighting devices A, B, and C, and a control instruction designating the use case "bedtime" is assumed to be issued from one of two terminals 200.

At this time, the terminal 200 does not specify a concrete dimming quantity, but designates the same use case "3 bedtime" for all the lighting devices A, B, and C, and issues a control instruction. Accordingly, each of the lighting devices A, B, and C makes a state transition so as to meet a dimming quantity set for the use case "3 bedtime." Then the lighting devices broadcast their states.

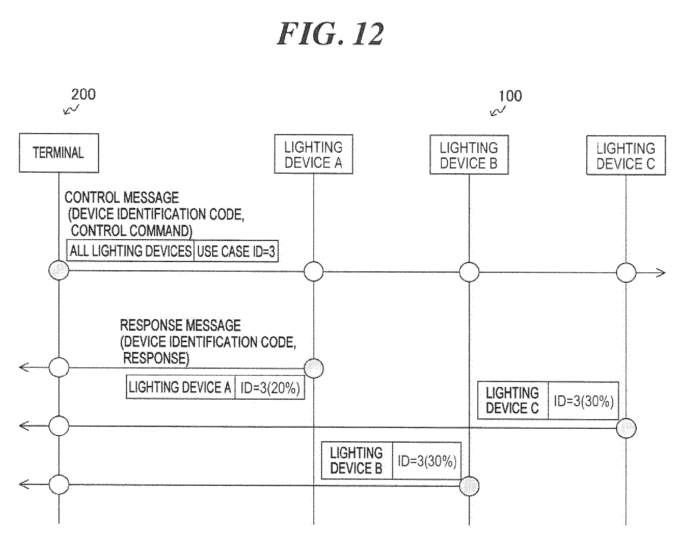

Fig. 12 is a sequence diagram showing an example of a flow of processes for performing concurrent control on all lighting devices 100 from the terminal 200 according to a use case in the embodiment of the present invention.

The terminal 200 is configured to be able to specify a use case ID in a control message. In this example, "3" that is "bedtime" is specified as a use case ID.

The lighting devices A, B, and C receive a control message transmitted from the terminal 200. A use case ID is contained in the control message received by each of the lighting devices A, B, and C. If each of the lighting devices A, B, and C retains the association with a control value corresponding to the use case ID, the lighting device controls its own state according to the control value associated with the use case ID. Each of the lighting devices A, B, and C that has controlled itself has its own identifier in its device identification code, and transmits a response message containing a result of control (lit state, extinguished state, dimmed state, or toned state), and the use case ID. Herein, a dimming quantity indicated as the result of control is 20 % for the lighting device A and 30 % for the lighting devices B and C.

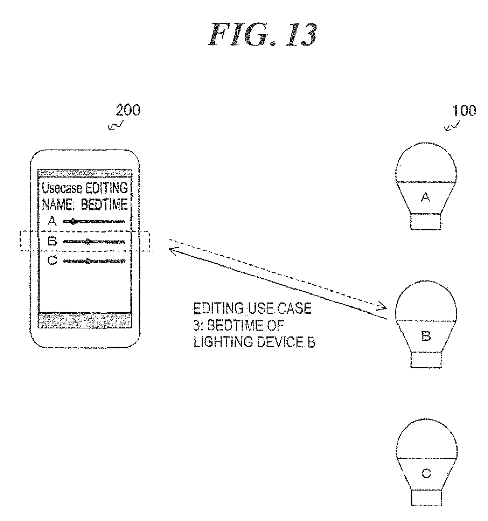

Fig. 13 is a diagram outlining editing of a use case setting for each lighting device 100 to be performed by the terminal 200 in the embodiment of the present invention.

Each of lighting devices 100 is configured to be able to acquire or set an association of a use case ID with a control value in response to a request transmitted from the terminal 200. The terminal 200 is configured to manage use case IDs and control values, which are set for each lighting device 100, on a centralized basis.

For a user's better understanding of the meanings of respective use case IDs, a user may be allowed to assign use case names, which express use scenes, for example, "morning," "daytime," and "bedtime" to the use case IDs. When an association of use case IDs with control values is set for each of lighting devices 100 by the terminal 200, use case names may also be set. Thus, the use case names can be read from the lighting device 100 by an optional terminal 200, and lighting devices 100 can be managed by a plurality of terminals 200.

Owing to the foregoing configuration, a user can use the terminal 200 to manage on a centralized basis a combination of lighting devices 100 to be used and control values to be set for the respective lighting devices, in relation to each of use scenes. Namely, the terminal 200 is configured to peruse and edit set values for each use case of each lighting device 100 through a dialog with a user. The lighting devices 100 can be concurrently controlled based on the control values set for each use case.

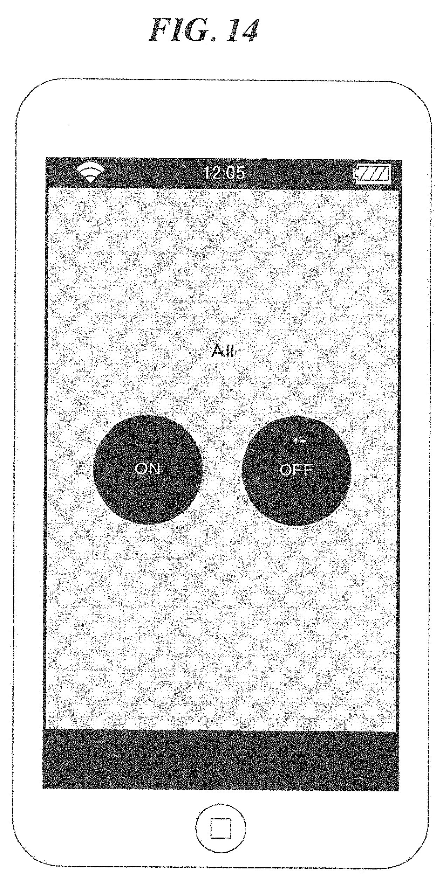

Fig. 14 is a diagram showing a first example of display on the terminal 200 in the embodiment of the present invention. In this example, buttons for use in concurrently turning on or off the power supplies of all lighting devices 100 are shown.

When a user touches "On", all the lighting devices 100 are concurrently lit. When the user touches "Off", all the lighting devices 100 are concurrently extinguished.

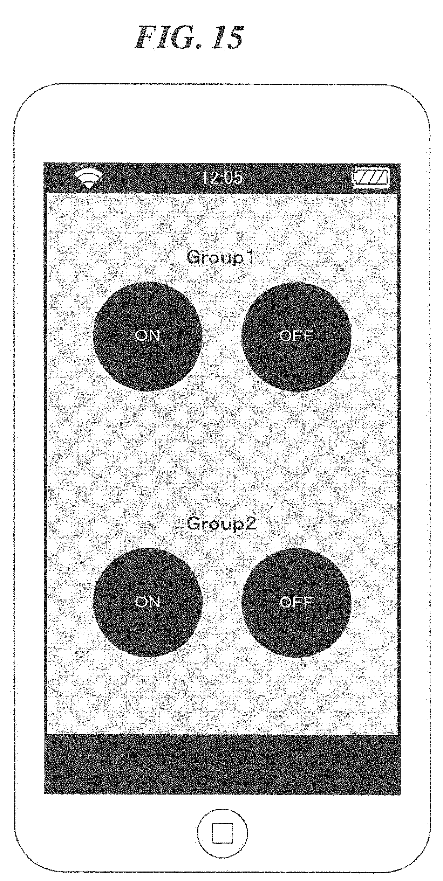

Fig. 15 is a diagram showing a second example of display on the terminal 200 in the embodiment of the present invention. In this case, buttons for use in turning on or off the power supplies of lighting devices 100 group by group are shown.

When a user touches "On" in "Group1", lighting devices 100 belonging to a first lighting group 101 are concurrently lit. When the user touches "Off" in "Group1", the lighting devices 100 belonging to the first lighting group 101 are concurrently extinguished. When the user touches "On" in "Group2", lighting devices 100 belonging to a second lighting group 102 are concurrently lit. When the user touches "Off" in "Group2", the lighting devices 100 belonging to the second lighting group 102 are concurrently extinguished.

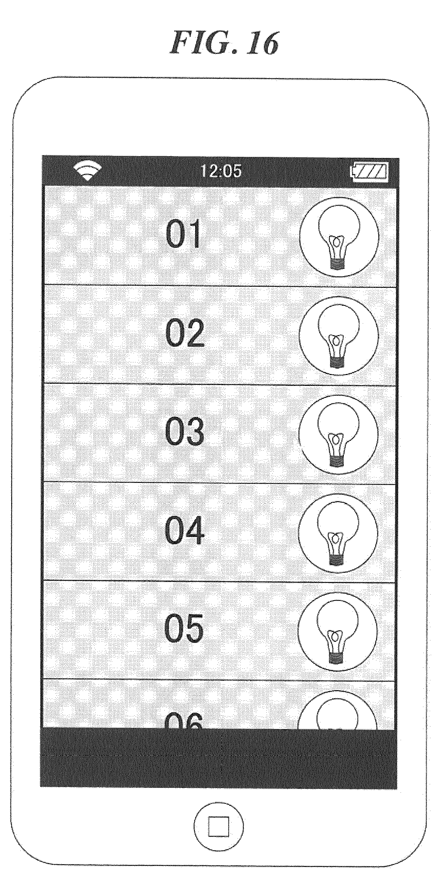

Fig. 16 is a diagram showing a third example of display on the terminal 200 in the embodiment of the present invention. In this example, buttons for use in turning on or off the power supplies of respective lighting devices 100 one by one are shown.

For example, when the third lighting device 100 is extinguished, if a user touches a section "03", the third lighting device 100 is lit. In contrast, when the third lighting device 100 is lit, if the user touches the section "03", the third lighting device 100 is extinguished. The list of lighting devices 100 is vertically continuous. When a touch panel is, for example, flipped, the other part of the list can be displayed.

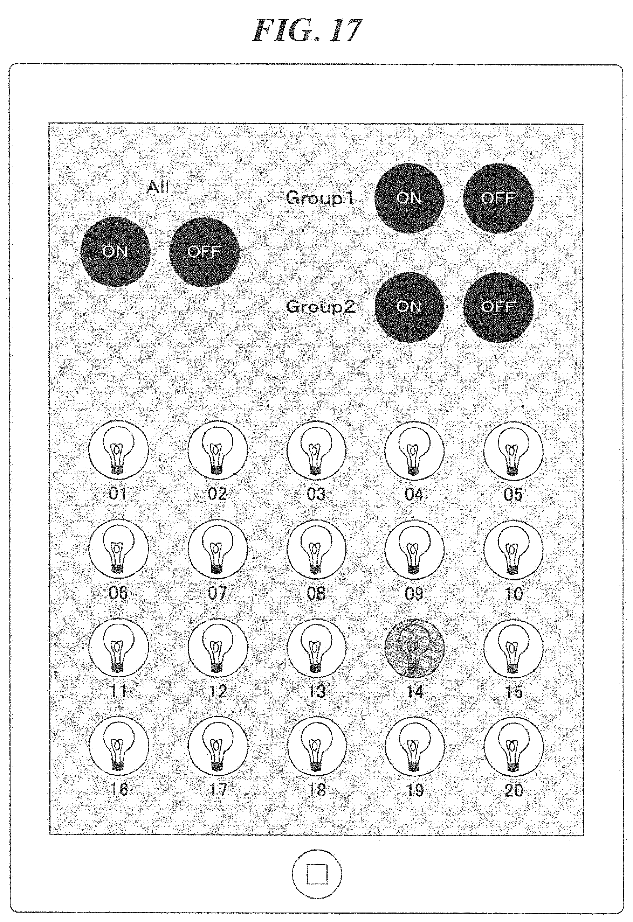

Fig. 17 is a diagram showing a fourth example of display on the terminal 200 in the embodiment of the present invention. The aforesaid first to third examples of display are presented on the assumption that a small-sized handheld terminal whose display part has a small area is employed. In the fourth example of display, a tablet terminal whose display part has a wider area is assumed to be employed. In this case, the buttons shown in the first to third examples of display can be arranged all together. However, if the number of lighting devices 100 is too large, a touch panel may be, for example, flipped to display the other part of the image.

### 2. Examples of application

Now, examples of application will be described below on the assumption that Bluetooth (registered trademark) Low Energy (hereinafter, BLE) that is optimized for super-low power consumption is adopted as a standard for wireless communication in the embodiment. Specifically, the lighting devices 100 and terminals 200 are presumably provided with a digital short-distance wireless communication feature stipulated in BLE and perform a transmitting action and receiving action.

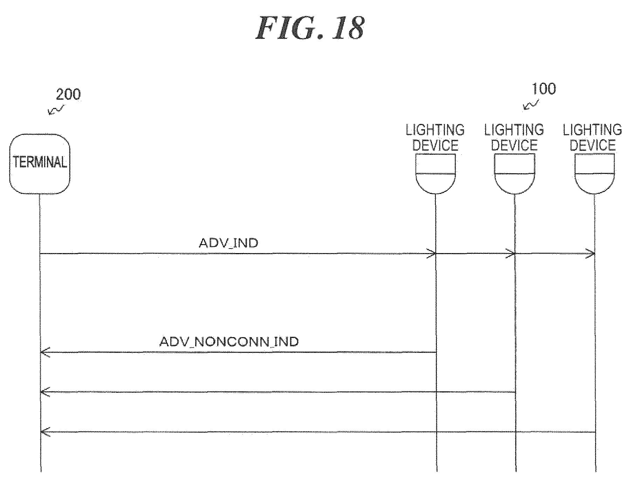

Fig. 18 is a diagram showing an example of application to BLE in a case where all lighting devices 100 are concurrently controlled from the terminal 200 in the embodiment of the present invention.

Lighting devices 100 and a terminal 200 use an advertising packet alone to bidirectionally communicate with one another on advertising channels without establishing a communication connection on a data channel (conectionless). Assuming that the terminal 200 establishes a connection individually with each of the lighting devices 100, a communication time required to obtain a response from each of the lighting devices 100 gets longer, which impairs a user's feeling of use. For avoiding this, control through bidirectional connectionless communication is employed. In particular, in case of controlling numerous lighting devices 100, communication efficiency in the bidirectional connectionless method is expected to improve outstandingly.

The terminal 200 transmits an advertising indication (ADV_IND) advertising protocol data unit (PDU). The terminal 200 stores a universally unique identifier (UUID), which represents control information, in the ADV_IND advertising PDU. The UUID is an identifier that is uniquely assigned in all space-times and takes on a value of 128 bits long.

When the lighting device 100 receives the ADV_IND advertising PDU which stores a UUID representing control information, the lighting device controls its own state on the basis of the control information. The lighting device 100 then transmits a non-connectable advertising indication [ADV_NONCONN_IND) advertising PDU which stores a UUID representing its own state. In the embodiment, a type of advertising PDU transmitted from the terminal 200 is expressed as ADV_IND, and a type of advertising PDU transmitted from the lighting device 100 is expressed as NONCONN_IND. However, it should be noted that the present invention is not limited to these expressions, and the types of advertising PDUs can be determined such that both may be expressed as ADV-IND, based on the system specifications of the terminal 200 and lighting device 100.

In this example, such a case is assumed that a plurality of lighting devices 100 are controlled concurrently. The terminal 200 sets a value in the ADV_IND advertising PDU so as to designate the lighting devices 100 as a group of lighting devices to be controlled. When each of the lighting devices 100 receives the ADV_IND advertising PDU, if the lighting device belongs to the designated group, the lighting device stores its own identifier and control information in the ADV_NONCONN_IND advertising PDU, and transmits the advertising PDU.

In the drawing, arrows of ADV_IND and ADV_NONCONN_IND respectively signify that advertising PDUs conformable to a BLE specification are transmitted on three advertising channels (channels 37, 38, and 39). The same applies to any optional advertising PDUs in subsequent drawings.

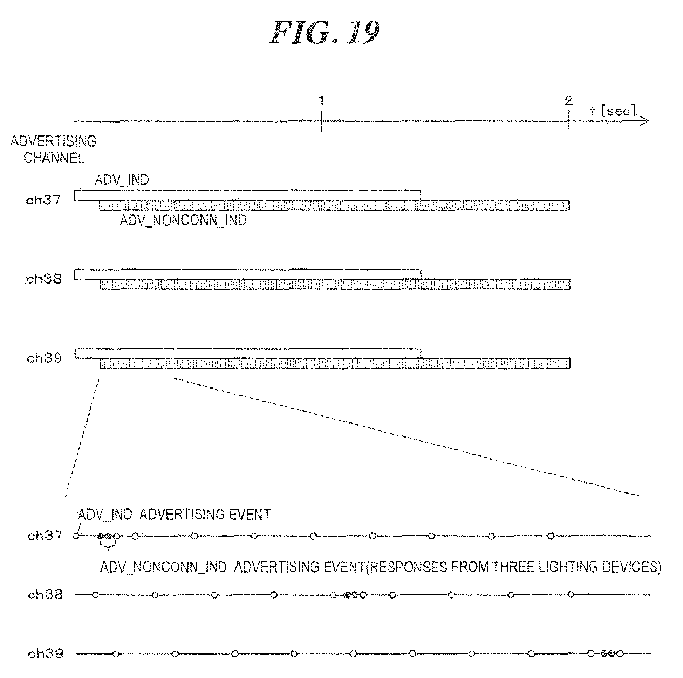

Fig. 19 is a diagram showing an example of radio waves on the advertising channels of BLE, in the embodiment of the present invention.

The terminal 200 repeats frequency hopping in a time-sharing manner according to a BLE specification, for example, for about one second while circulating the same ADV_IND among the three advertising channels. In this case, an interval between advertising events is stipulated as 10 ms or less in BLE.

Each of lighting devices 100 regularly scans the advertising channels. When receiving ADV_IND, if the lighting device recognizes itself as being an object of control, the lighting device 100 performs designated control. Thereafter, while ADV_NONCONN_IND is circulated among the three advertising channels, frequency hopping is repeated in a time-sharing manner according to a BLE specification for example, for about two seconds. In this case, an interval between advertising events is set as 100 ms or more in BLE.

While issuing ADV_IND, the terminal 200 scans the advertising channels and receives ADV_NONCONN_IND transmitted from the lighting device 100.

In the drawing, ADV_NONCONN_IND advertising events arisen from the respective lighting devices 100 are shown not to collide with one another. If the lighting devices 100 simultaneously begin returning a response, there arises a possibility that the advertising events may collide with one another and radio waves may interfere with one another. However, owing to a BLE mechanism that an interval between advertising events is varied depending on a random number, interference can be eventually avoided. A period during which the lighting device 100 transmits ADV_NONCONN_IND is set to a long period. This is intended to increase the number of times of occurrence of advertising events, and increase the number of advertising events which are prevented from interfering with one another.

Each of the lighting device 100 and terminal 200 receives an identical advertising signal a plurality of times. After beginning issuing ADV_NONCONN_IND, the lighting device 100 does not return a new response to a control signal having the same contents. Thus, interference of radio waves on an advertising channel is avoided.

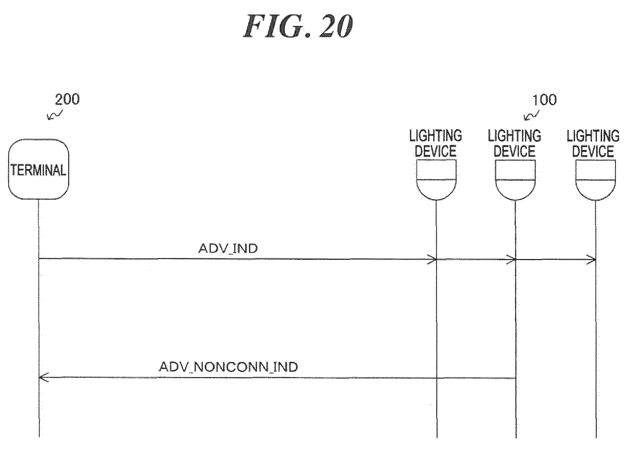

Fig. 20 is a diagram showing an example of application to BLE in a case where individual control is performed on a specific lighting device 100 from the terminal 200 in the embodiment of the present invention.

For controlling a specific lighting device 100, the terminal 200 sets a value in an ADV_IND advertising PDU so as to designate the specific lighting device 100 as an object of control. When receiving the ADV_IND advertising PDU, if each of lighting devices 100 recognizes itself as being an object of control, the lighting device stores its own identifier and control information in an ADV_NONCONN_IND advertising PDU, and transmits the advertising PDU.

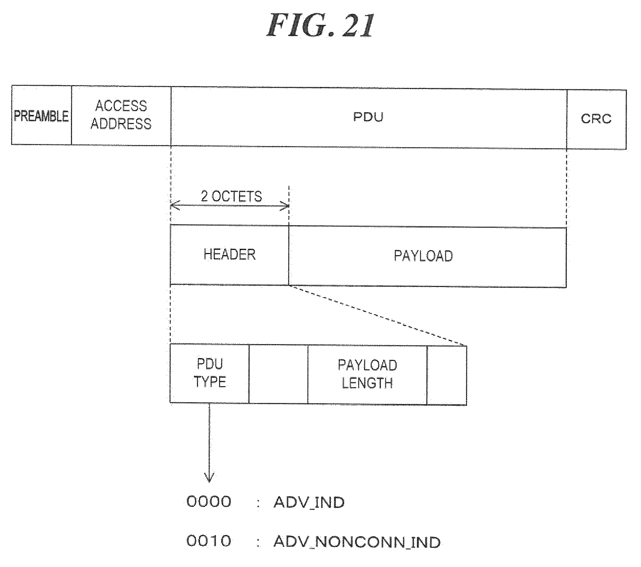

Fig. 21 is a diagram showing a communication packet format of BLE. The drawing also shows numerical values representing PDU types set in an advertising PDU. According to BLE, communication of a link layer, which will be described below, is performed between the lighting device 100 and terminal 200.

A packet format for a link layer includes a preamble of 1 octet long, an access address of 4 octets long, a PDU of 2 to 39 octets long, and a cyclic redundancy check (CRC) of 3 octets long.

A preamble is a signal to be appended to the leading address of a packet so that frequency synchronization, symbol timing estimation, or AGC adjustment can be performed on a receiving side. An access address is a physical address to be used as a correlation code to associate the address with a physical channel. A CRC is a cyclic redundancy check code to be used to detect an error occurring in a process of communication.

A PDU stands for a protocol data unit to be transmitted in a link layer. An advertising channel PDU is used for a control instruction from the terminal 200 or a response from the lighting device 100. The advertising channel PDU is divided into a header and payload. A PDU type and payload length are specified in the header of 2 octets long. When the PDU type of 4 bits long has 0000, it means that the PDU is ADV_IND. When the PDU type has 0010, it means that the PDU is ADV_NONCONN_IND.

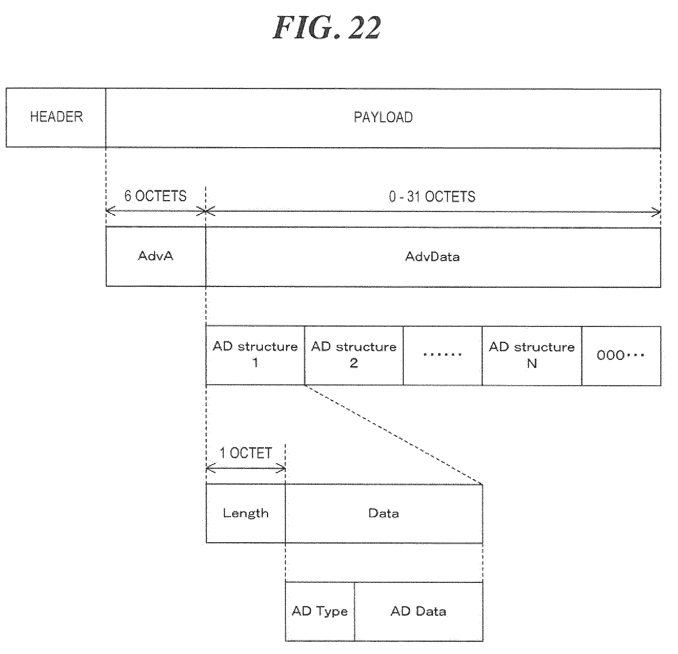

Fig. 22 is a diagram showing a format for an advertising PDU. As mentioned above, the PDU is divided into a header and payload. In the embodiment, the advertising PDUs of ADV_IND and ADV_NONNCONN_IND are assumed. In this case, the payload is divided into an AdvA field and AdvData field. The AdvA field of 6 octets long is a field in which an address of an advertiser is contained. The AdvData field is a field in which advertising data transmitted from a host of the advertiser is contained. The AdvData field has N AD structures, and "0" value is embedded in a surplus portion of the field.

Each of AD structures has a Length field of 1 octet long and a Data field. The length of the Data field is specified by the Length field. The Data field consists of an AD type and AD data.

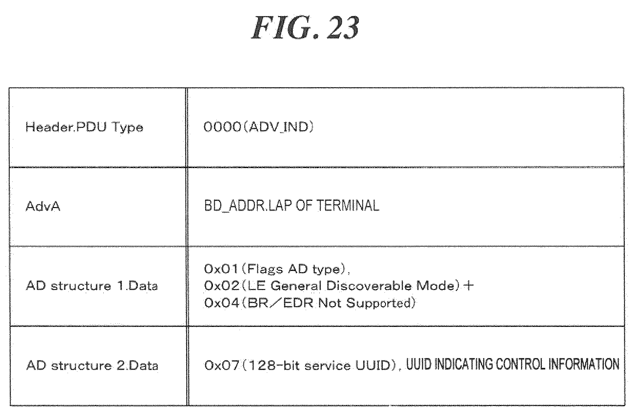

Fig. 23 is a diagram showing an example of the contents of an ADV_IND advertising PDU transmitted from the terminal 200 in the embodiment of the present invention.

It is indicated with "0000" specified as the PDU type in the head, as mentioned above, that a PDU is an ADV_IND advertising PDU.

In the AdvA field, BD_ADDR.LAP of the terminal 200 is contained as an address of an advertiser. An address BD_ADDR of 48 bits long is assigned to each of devices conformable to BLE. 24 bits on the side of the most significant bit (MSB) represent a manufacturing company identification code, and 24 bits on the side of the least significant bit (LSB) represent an in-house code assigned by a manufacturing company.

0x01 (where 0x signifies that subsequent numerals are hexadecimal) indicating a group-of-flags AD type is stored at the beginning in the Data field of the first AD structure (AD structure 1). In the case of the group-of-flags AD type, subsequent bit values represent a discovery mode or an action mode in which an advertiser can enter. In the embodiment, General Discoverable Mode is specified as the discovery mode and for a device which does not support Basic Rate/Enhanced Data Rate (BR/EDR) other than BLE, "bit 1 (0x02) indicating LE General Discoverable Mode" and "bit 2 (0x04) indicating BR/EDR Not Supported" are set. However, it should be noted that The present invention is not limited to the AD structure, and an appropriate flag can be set according to a feature and action mode supported by the terminal 200.

In the Data field of the second AD structure (AD structure 2), "0x07" indicating a service UUID of 128 bits long is stored at the beginning. 128 subsequent bits represent a service UUID indicating control information.

A format for a service UUID may be, for example, determined as presented below according to the UUID version 4 defined in RFC 4122. xxxxxxxx-xxxx-4xxx-8xzz-zzzzzzzzzzzz Herein, each digit is 4 bits long. "4" represents a UUID version. Three higher-order bits of "8" represent a variant with which an internal layout of an UUID is determined. In the embodiment, control information is allocated to a field "x" of 8 octets (64 bits) long, and a field "z" stores a specific fixed value. With the fixed value in "z," the service UUID relating to the present invention is recognized, and the value in the "x" part can be recognized as control information. If necessary, a field larger than 64 bits may be allocated to control information.

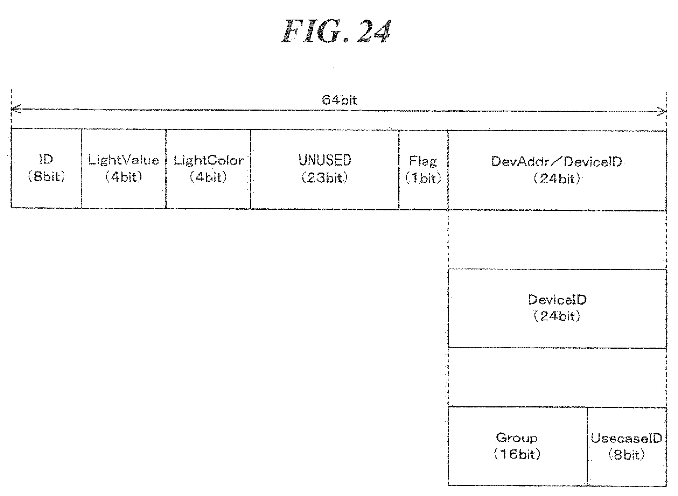

Fig. 24 is a diagram showing an example of a data format for control information in the embodiment of the present invention.

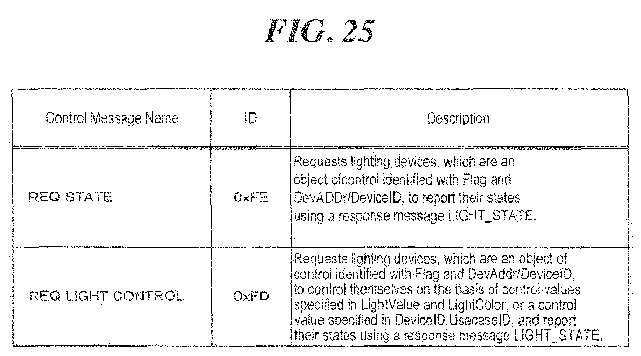

ID (8 bits long) represents a type of control message. When ID has 0xFE, a control message name is, as shown in Fig. 25, REQ_STATE. In the case of REQ_STATE, lighting devices 100 that are objects of control represented with Flag (1 bit long) and DevAddr/DeviceID (24 bits long) are requested to report their states using a response message LIGHT_STATE. When ID has OxFD, the control message name is, as shown in Fig. 25, REQ_LIGHT_CONTROL. In the case of REQ_LIGHT_CONTROL, the lighting devices 100 that are objects of control represented with Flag and DevADDr/DeviceID are requested to control themselves according to control values specified in LightValue and LightColor or a control value specified in DeviceID.UsecaseID and to then report their states using the response message LIGHT_STATE.

DevAddr and DeviceID exclusively share the same field. A value in Flag indicates which of the DevAddr and DeviceID values is stored in the field. When Flag is "0", DevAddr represents BD_ADDR.LAP of the lighting device 100. When Flag is "1", DeviceID is used to provide information for identifying a plurality of lighting devices 100.

If a value in DeviceID.Group (16 bits long) is not "0x0000", the value is a value (group ID) for specifying a specific group to which lighting devices 100 belong. A value in DeviceID.UsecaseID (8 bits long) ranging from 0x01 to 0xFF is a value with which a use case setting is discriminated. A lighting device 100 in which a value in DeviceID.Group is retained as a group ID and a use case setting with a value in DeviceID.UsecaseID as ID is retained is regarded as an object of control. When a value in DeviceID.UsecaseID is 0x00, all the lighting devices 100 in which the value in DeviceID.Group is retained as the group ID are regarded as objects of control.

When a value in DeviceID.Group is "0x0000", a group is not designated with a group ID, but lighting devices are handled as mentioned below. Specifically, if the value in DeviceID.Usecaseld is 0x00, all lighting devices 100 are regarded as objects of control. If the value in DeviceID.UsecaseID ranges from 0x01 to 0xFF, all lighting devices in which a use case setting with the value in DeviceID.UsecaseID as its ID is retained are regarded as objects of control.

Control of dimming or toning is performed based on values in LightValue and LightColor in a control message or a value in DeviceID.UsecaseID.

When Flag has 0, or when Flag has 1 and DeviceID.UsecaseID has 0x00, LightValue and LightColor are referenced.

LightValue (4 bits long) is a field when a controlled state of the lighting device 100 is specified in a control message. A value 0x00 indicates an extinguished state, a value 0x0F indicates a fully lit state, and a value ranging from 0x01 to 0x0E is a dimming value.

LightColor (4 bits long) is a field when a light color of the lighting device 100 is specified in a control message. In a system in which a light color of one lighting device 100 is controlled by mixing three LED lightings that have three colors of red, green, and blue respectively, the color can be controlled with a ratio of light quantities thereof. In the embodiment, each of lighting devices 100 stores a plurality of (one to sixteen) ratios of light quantities. Based on a specific ratio of light quantities indexed with a value in LightColor (ranging from 0x00 to 0x0F) and a dimming quantity in LightValue, the light quantities of the LED lightings of red, green, and blue respectively are determined.

In a case other than a case where Flag is "1" and DeviceID.UsecaseID is "0x00", the lighting device 100 controls itself according to a dimming value and toning value associated with a use case whose ID is a value specified in Device ID.UsecaseID. The dimming value and toning value are pieces of information identical to those specified in LightValue and LightColor in a control message.

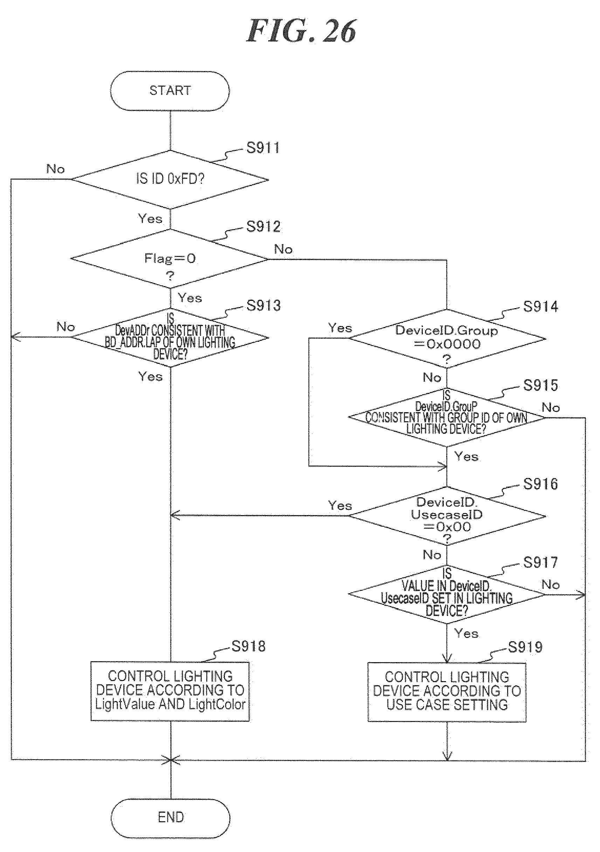

Fig. 26 is a flowchart illustrating an example of a procedure of processes for contents-of-control discrimination to be performed in the lighting device 100 in the embodiment of the present invention. If ID in control information in the format shown in Fig. 24 has 0xFD (REQ_LIGHT_CONTROL) (step S911: Yes), the lighting device 100 determines whether the lighting device is an object of control, and decides the contents of control. If ID has any value other than 0xFD (step S911: No), the processing is terminated and proceeds to processing of a message having any other ID.

If Flag is "0" (step S912: Yes), a lighting device determines whether a value in DevAddr is consistent with BD_ADDR.LAP of the lighting device. If the value is inconsistent (step S913: No), the processing is terminated. If the value is consistent (step S913: Yes), the lighting device controls its own lighting device 100 according to values in LightValue and LightColor (step S918).

When Flag is "1" (step S912: No), if Device ID.Group has any value other than 0x0000 (step S914: No) and the value is inconsistent with a group ID that is set in the lighting device (step S915: No), the processing is terminated. In contrast, if DeviceID.Group has 0x0000 (step S914: Yes) or DeviceID.Group has any value other than 0x0000 (step S914: No), and if the value is consistent with the group ID set in the lighting device (step S915: Yes), the processing is continued as mentioned below.

If DeviceID.UsecaseID is "0x00" (step S916: Yes), the lighting device controls its own lighting device 100 according to values in LightValue and LightColor (step S918). Even when DeviceID.UsecaseID has any value other than 0x00 (step S916: No), if a use case whose ID is the value in DeviceID.UsecaseID is set in the lighting device (step S917: Yes), the lighting device controls its own lighting device 100 according to the use case setting (step S919). Even when DeviceID.UsecaseID has any value other than "0x00" (step S916: No), if a use case whose ID is the value in DeviceID.UsecaseID is not set in the lighting device (step S917: No), the processing is terminated.

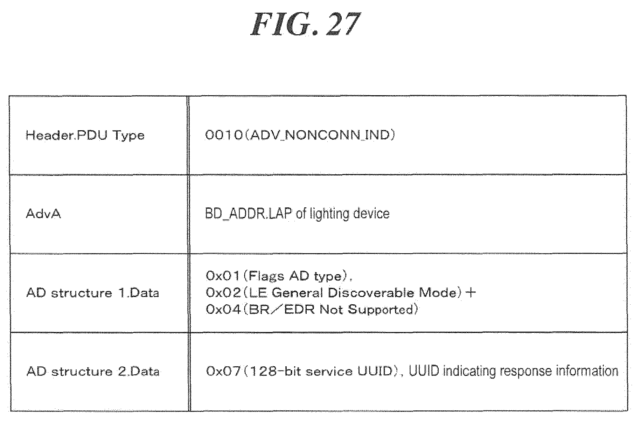

Fig. 27 is a diagram showing an example of the contents of an ADV_NONCONN_IND advertising PDU transmitted from the lighting device 100 in the embodiment of the present invention.

It is indicated that a PDU is the ADV_NONCONN_IND advertising PDU, as mentioned above, with "0010" specified as a PDU type in a header.

An AdvA field contains BD_ADDR.LAP of the lighting device 100 as an address of an advertiser.

In the first AD structure (AD structure 1), for example, the same group-of-flags AD type data as those in an ADV_IND advertising PDU transmitted from the terminal 200 are set.

In a Data field of the second AD structure (AD structure 2), "0x07" indicating a service UUID of 128 bits long is stored at the beginning. The subsequent 128 bits store a service UUID indicating response information. The format for the service UUID is identical to the format for a service UUID indicating control information. Therefore, the response information is allocated to 64 bits out of a 128-bit UUID.

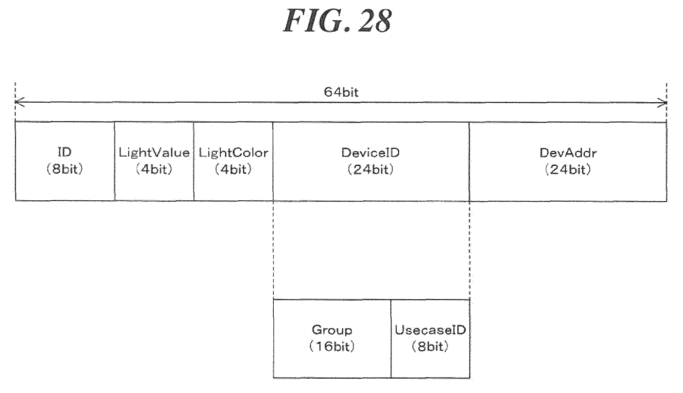

Fig. 28 is a diagram showing an example of a data format for response information in the embodiment of the present invention.

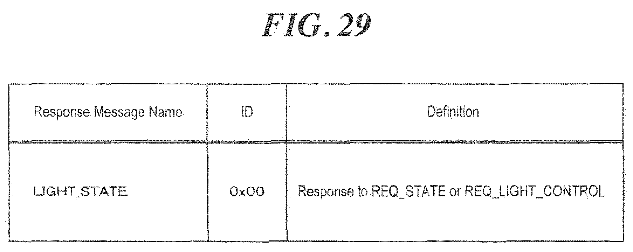

ID (8 bits long) represents a type of response. As shown in Fig. 29, when ID indicates 0x00, a response type is LIGHT_STATE. In the case of LIGHT_STATE, it is a response to REQ_STATE or REQ_LIGHT_CONTROL or a state notification issued in response to a maneuver instruction sent from the maneuver acceptor 111.

LightValue (4 bits long) is a field for indicating a controlled state on a dimming value of the lighting device 100 in a response, and contains the same information as that in a field having the same name in a control message.

DevAddr (24 bits long) indicates a value of BR_ADDR.LAP of the lighting device 100. With the value, the terminal 200 identifies the lighting device 100 which has responded.

DeviceID (24 bits long) stores a value, which is specified in a DeviceID field of a control message when Flag in the control message is "1", without any change. When Flag is "0", or when a state notification is issued in response to a maneuver instruction sent from the maneuver acceptor 111, "0x000000" is stored in DeviceID (24 bits long).

With the values in DeviceID of a response message, the terminal 200 identifies a group which is specified in control information and based on which the lighting device 100 recognizes as being an object of control, and a use case specified in the control information.

If a value in DeviceID.UsecaseID of response information ranges from "0x01" to "0xFF", a dimming value and toning value associated with a use case and set in the lighting device 100 whose ID is the value in DeviceID.Usecase ID are set in the LightValue field and LightColor field respectively.

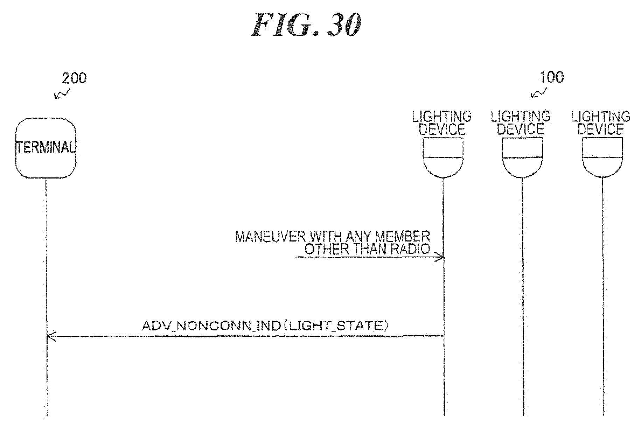

Fig. 30 is a diagram showing an example of application to BLE in a case where a specific lighting device 100 is maneuvered in the embodiment of the present invention.

When any of lighting devices 100 is maneuvered with a maneuver member other than by radio, if the lighting device 100 transmits a response message in which ID is Light_STATE, the terminal 200 can always recognize the latest controlled state of the lighting device 100.

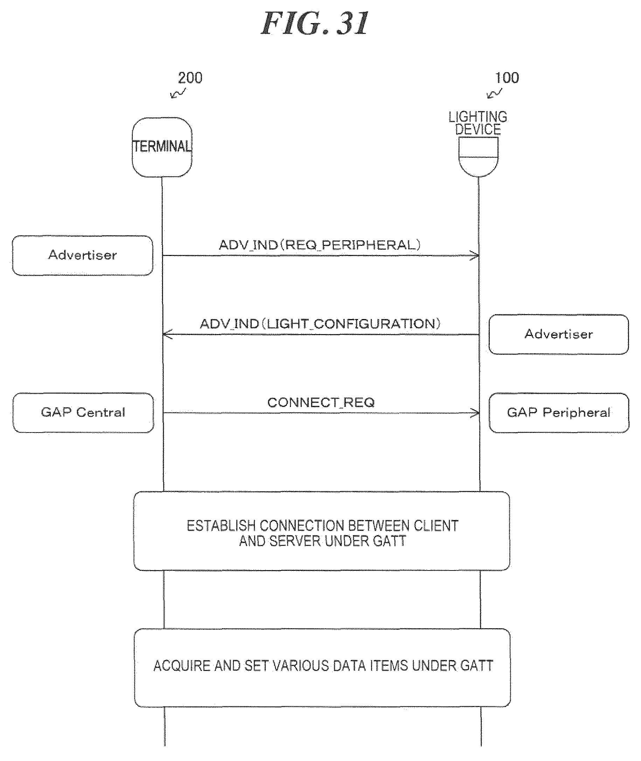

Fig. 31 is a diagram showing an example of application to BLE in a case where data are set in the lighting device 100 from the terminal 200 in the embodiment of the present invention.

In the example of application, access to information whose access frequency by the terminal 200 is limited, such as each use case setting retained in the lighting device 100, is realized through data exchange not by advertising but by using service-characteristic stipulated in Generic Attribute Profile (GATT). Therefore, a communication connection is established between the terminal 200 and lighting device 100.

Prior to a setting maneuver under GATT, the terminal 200 starts a peripheral role stipulated in General Access Profile (GAP) for the lighting device 100 by transmitting an ADV_IND control message (REQ_PERIPHERAL), and requests the lighting device 100 to perform advertising. Thereafter, the terminal 200 behaves as a central role stipulated in GAP.

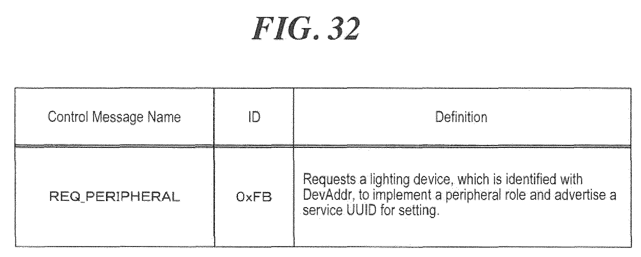

The data format for an ADV_IND control message is the one shown in Fig. 24. As shown in Fig. 32, when ID indicates 0xFB, the data format is REQ_PERIPHERAL. In the case of REQ_PERIPHERAL, a peripheral role stipulated in GAP is started for the lighting device 100 identified with DevAddr in the format shown in Fig. 24, and the lighting device 100 is requested to advertise a service UUID for setting.

The lighting device 100 specified in the REQ_PERIPHERAL advertising message starts the peripheral role stipulated in GAP, and advertises the service UUID (LIGHT_CONFIGURATION) for setting, using an ADV_IND advertising PDU.

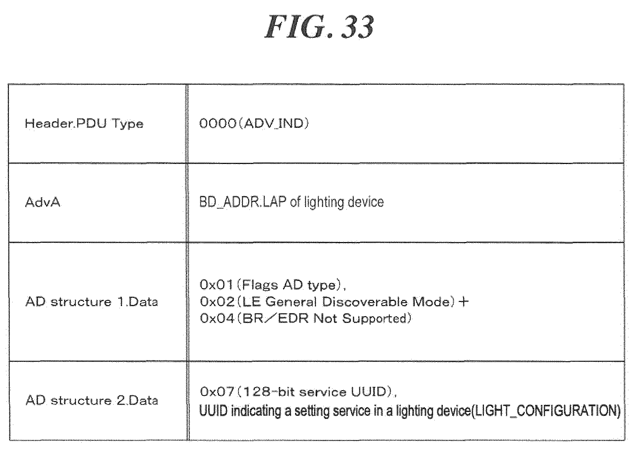

Fig. 33 is a diagram showing an example of the contents of an ADV_IND advertising PDU, which is transmitted from the lighting device 100 and which notifies of a setting service, in the embodiment of the present invention.

It is indicated that a PDU is an ADV_IND advertising PDU with "0000" specified as a PDU type in a header as mentioned above.

In an AdvA field, BD_ADDR. LAP of the lighting device 100 is contained as an address of an advertiser.

A value in the first AD structure (AD structure 1) is identical to a value in an ADV_NONCONN_IND advertising PDU which is shown in Fig. 27 and issued from the lighting device 100.

In a Data field of the second AD structure (AD structure 2), "0x07" representing a service UUID of 128 bits long is stored at the beginning. The subsequent 128 bits store a service UUID indicating a setting service in the lighting device 100. The format for the service UUID is identical to that for a service UUID representing the aforementioned response information. Therefore, a value representing the setting service is allocated to 64 bits out of the 128-bit UUID.

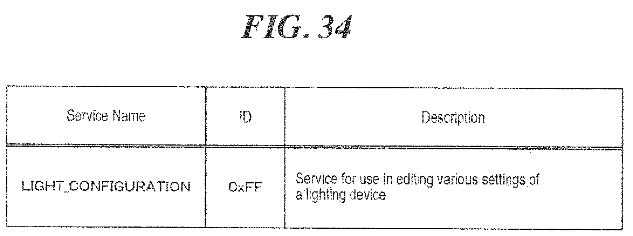

The service UUID indicating the setting service has the same format as response information described referring to Fig. 28 does. As shown in Fig. 34, when ID indicates 0xFF, a service type is LIGHT_CONFIGURATION. LIGHT_CONFIGURATION signifies that setting of the lighting device 100 is to be performed. In LIGHT_CONFIGURATION, any fields other than ID in Fig. 28 are "0".

The terminal 200 having received an ADV_IND advertising PDU storing LIGHT_CONFIGURATION establishes a connection on a data channel with the lighting device 100 according to a BLE connection sequence which begins with advertising of CONNECT_REQ. The terminal 200 then uses service-characteristics stipulated in GATT of the lighting device 100, to acquire setting data and perform the setting of the lighting device 100.

A UUID of a service provided by the lighting device 100 is a value specified in LIGHT_CONFIGURATION. As the format for the UUID of a characteristic, for example, a format presented below may be adopted according to the UUID version 4 defined in RFC 4122. xxxxzzzz-zzzz-4zzz-8zzz-zzzzzzzzzzzz Herein, each digit is 4 bits long. In the embodiment, a field "z" contains a specific fixed value. A field "x" of 2 octets long has an ID value defined below. Specifically, an ID value of a characteristic is allocated to 16 bits at the beginning of a 128-bit UUID.

Under GATT, each of one or more services on a server is provided with a characteristic. A client writes or reads a value of a characteristic, whereby necessary processing is performed. In this example, a LIGHT_CONFIGURATION service in the lighting device 100 is provided with characteristics described below. The terminal 200 reads or writes the characteristic values so as to acquire or set data.

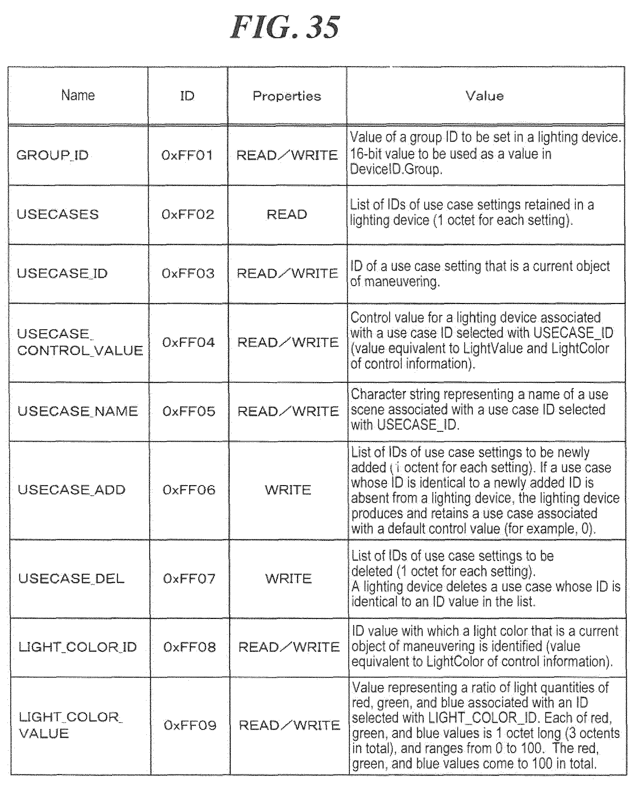

Fig. 35 is a diagram showing an example of a list of characteristics provided by a LIGHT_CONFIGURATION service for setting data in the embodiment of the present invention. The characteristic values may be retained in, for example, the state retainer 140.

A value of a GROUP_ID characteristic (ID: 0xFF01) is a value of a group ID to be set in the lighting device 100. The value is a 16-bit value to be used as a value that is specified in a DeviceID.Group field of control information or response information. The characteristic can cope with both reading and writing. When the value of the characteristic is 0, it means that no group is designated.

A value of a USECASE characteristic (ID: 0xFF02) is a list of IDs of use case settings retained in the lighting device 100. Each of the use case IDs in the list is 1 octet long. The characteristic can merely cope with reading. Each of the use case settings includes a control value for the lighting device 100 and a name expressing a use scene. The former is accessed with a USECASE_CONTROL_VALUE characteristic, and the latter is accessed with a USECASE_NAME characteristic.

A value of a USECASE_ID characteristic (ID: 0xFF03) is an ID of a use case setting regarded as a current object of maneuvering. The characteristic can cope with both reading and writing. An effective range of values of a use case ID is from "0x01" to "0xFF". By writing a specific ID value in the characteristic, the use case setting associated with the ID can be accessed with the USECASE_CONTROL_VALUE characteristic or USECASE_NAME characteristic.

A value of a USECASE_CONTROL_VALUE characteristic (ID: 0xFF04) is a control value for the lighting device 100 associated with a use case selected with a USECASE_ID characteristic. The value is a value of 8 bits in total equivalent to a LightValue field and LightColor field respectively of control information and response information. The USECASE_CONTROL_VALUE characteristic can cope with both reading and writing.

A value of a USECASE_NAME characteristic (ID: 0xFF05) is a character string of a name expressing a use scene associated with a use case selected with the USECASE_ID characteristic. The USECASE_NAME characteristic can cope with both reading and writing.

A value of a USECASE_ADD characteristic (ID: 0xFF06) is a list of IDs of use case settings to be newly added. Each of the use case IDs in the list is 1 octet long. The characteristic can merely cope with writing. When a value is written in the characteristic, if a use case whose ID value is identical to any of written IDs in the list is absent from its own lighting device 100, the lighting device 100 generates and retains a use case setting associated with a default control value (for example, 0). When a use case setting is added, the ID is added to the ID list that is read by the USECASE characteristic next time.

A value of a USECASE_DEL characteristic (ID: 0xFF07) is a list of IDs of use case settings to be deleted. Each of the use case IDs in the list is 1 octet long. The characteristic can merely cope with writing. When a value is written in the characteristic, the lighting device 100 deletes a use case setting whose ID value corresponds to the written value in the list. When the use case setting is deleted, the ID is deleted from the ID list that is read by the USECASE characteristic next time.

A value of a LIGHT_COLOR_ID characteristic (ID: 0xFF08) is an ID value to identify a light color of a current object of maneuvering. The value is equivalent to a LightColor field of control information. The characteristic can cope with both reading and writing. By writing a specific ID value in the characteristic, a light color setting associated with the ID can be accessed with the LIGHT_COLOR_VALUE characteristic.

A value of a LIGHT_COLOR_VALUE characteristic (ID: 0xFF09) is a value representing a ratio of light quantities of red, green, and blue respectively associated with an ID selected with a LIGHT_COLOR_ID characteristic. The total value of light quantity is 3 octets with each light quantity of red, green and blue being 1 octet. Each of the values of red, green and blue light quantities ranges from 0 to 100, and the total value of the red, green, and blue light quantities respectively is set to 100. The LIGHT_COLOR_VALUE characteristic can cope with both reading and writing.

As described so far, according to the embodiment of the present invention, the lighting device 100 and terminal 200 perform bidirectional connectionless communication so that high-speed control can be achieved in a short period of time. Any of a plurality of terminals 200 can be used to recognize the latest state of the lighting device 100.

The embodiment presents an example for embodying the present invention, and matters in the embodiment respectively have correspondence to matters specifying the claimed invention. Likewise, the matters specifying the claimed invention respectively have correspondence to the matters in the embodiment of the present invention assigned the same names. However, the present invention is not limited to the embodiment, but can be embodied while being modified in various manners without a departure from the gist of the invention.

Procedures of processes described in relation to the embodiment may be regarded as a method including the series of procedures, or may be regarded as a program for making a computer execute the series of procedures, or a recording medium for storing the program. As for the recording medium, for example, a compact disk (CD), mini disk (MD), digital versatile disk (DVD), memory card, or Blu-ray Disc (registered trademark) may be adopted.

### Reference Signs List

- 100:: lighting device,
- 101, 102:: lighting group,
- 111:: maneuver acceptor,
- 120:: control instruction detector,
- 130:: response signal transmitter,
- 140:: state retainer,
- 150:: lighting identifier retainer,
- 160:: light emitter,
- 200 to 202:: terminal,
- 210:: user interface,
- 211:: maneuver acceptor,
- 212:: display,
- 220:: control signal transmitter,
- 230:: response signal receiver,
- 240:: state retainer,
- 260:: display controller.

## Claims

1. A lighting control system comprising:
a plurality of lighting devices; and
a terminal that wirelessly communicates with the plurality of lighting devices, wherein
each of the plurality of lighting devices includes
a state retainer that retains a state of its own device,
a lighting identifier retainer that retains an identifier of the own device,
a control instruction detector that detects a control instruction issued to the own device, and updates the state, which is retained in the state retainer, into a state in accordance with the control instruction,
a light emitter that emits light according to the state retained in the state retainer, and
a response signal transmitter that transmits a response signal, which contains the state retained in the state retainer and the identifier retained in the lighting identifier retainer, in response to the control instruction detected by the control instruction detector; and
the terminal includes:
a control signal transmitter that transmits a control signal which contains the control instruction with all or part of the plurality of lighting devices as lighting devices to be controlled,
a response signal receiver that receives the response signal from each of the plurality of lighting devices, and
a display that displays the state of each of the plurality of lighting devices on the basis of the response signal.

2. The lighting control system according to claim 1, wherein the control signal transmitter transmits the control signal by sorting the plurality of lighting devices into any of a plurality of groups and regarding the group as a unit.

3. The lighting control system according to claim 1, wherein the control signal transmitter transmits the control signal that contains as the control instruction the dimmed states of the lighting devices to be controlled.

4. The lighting control system according to claim 1, wherein the control signal transmitter transmits the control signal that contains as the control instruction the toned states of the lighting devices to be controlled.

5. The lighting control system according to claim 1, wherein:
each of the plurality of lighting devices retains correspondence of the states of the own device to use cases;
the control signal transmitter transmits the control signal that contains the use case as the control instruction; and
the control instruction detector updates the state retained in the state retainer into a state associated with the use case contained in the control signal.

6. The lighting control system according to claim 1, wherein each of the plurality of lighting devices further includes a maneuver acceptor that accepts a maneuver specified in the control instruction.

7. The lighting control system according to claim 1, wherein:
the terminal further includes a maneuver acceptor that accepts a maneuver specified in the control instruction to the lighting devices to be controlled; and
the display and maneuver acceptor are formed with a touch panel.

8. The lighting control system according to claim 1, wherein:
a plurality of the terminals are included; and
the state of each of the plurality of lighting devices is displayed on each of the plurality of terminals.

9. A terminal comprising:
a control signal transmitter that transmits a control signal, which contains a control instruction with all or part of a plurality of lighting devices as lighting devices to be controlled, through wireless communication;
a response signal receiver that receives a response signal, which responds to the control instruction and contains the identifier and state of each of the plurality of lighting devices, through wireless communication; and
a display that displays the state of each of the plurality of lighting devices on the basis of the response signal.

10. A lighting control method, comprising the steps of:
transmitting a control signal by allowing a terminal to transmit a control signal, which contains a control instruction with all or part of a plurality of lighting devices as lighting devices to be controlled, through wireless communication;
detecting a control instruction by allowing each of the plurality of lighting devices to detect the control instruction issued to the own device, and update a state retained in a state retainer into a state in accordance with the control instruction;
emitting light by allowing each of the plurality of lighting devices to emit light according to the state retained in the state retainer;
transmitting a response signal through wireless communication by allowing each of the plurality of lighting devices to transmit a response signal, which contains the state retained in the state retainer and the identifier of the own device retained in a lighting identifier retainer, in response to the control instruction detected at the step of detecting the control instruction;
receiving a response signal through wireless communication by allowing the terminal to receive the response signal from each of the plurality of lighting devices; and
displaying by allowing the terminal to display the state of each of the plurality of lighting devices according to the response signal.

11. The lighting control method according to claim 10, wherein:
each of the plurality of lighting devices retains correspondence of the states of the own device to use cases;
the control signal containing the use case as the control instruction is transmitted at the step of transmitting the control signal; and
the state retained in the state retainer is updated into a state associated with the use case contained in the control signal at the step of detecting the control instruction.
